# EUROPEAN PATENT SPECIFICATION

(11) **EP 1 628 362 B1**
(45) Date of publication and mention of the grant of the patent: **31.10.2007**
(21) Application number: 05017290.7
(22) Date of filing: 09.08.2005
(51) Int. Cl.: H01R 4/72

(54) **Heating sleeve for shrinking on of shrink tube connections**
Erwärmungsmuffe zum Schrumpfen von Schrumpfmanschettenverbindungen
Bobine de chauffage des connections avec un manchon retractable

(30) Priority: 09.08.2004 DE 102004038629; 09.08.2004 US 600055 P
(43) Date of publication of application: 22.02.2006
(73) Proprietor: Airbus Deutschland GmbH, 21129 Hamburg (DE)
(72) Inventor: Kornrumpf, Manfred, 21629 Neu Wulmstorf (DE)
(74) Representative: Maiwald Patentanwalts GmbH

(56) References cited:
- US-A- 4 883 925
- US-A- 5 053 595

## Description

Device for connecting two elements; arrangement for connecting two elements; method for producing a device for connecting two elements; method for connecting two elements; and the use of a heating element for shrinking a shrink tube.

The invention relates to a device for connecting two elements, an arrangement for connecting two elements, a method for producing a device for connecting two elements, a method for connecting two elements, and the use of a heating element for shrinking a shrink tube.

According to the state of the art, a shrink tube is used to establish a connection between two elements to be connected.

The term "shrink tube" may relate in particular to a tube made from a thermoplastic material, which tube contracts due to the effect of heat. In other words, the diameter of the shrink tube is irreversibly reduced under the effect of heat such that the shrunk shrink tube engages the two elements to be connected and thus establishes a connection between the elements.

According to the state of the art, in order to connect two elements with the use of a shrink tube, a shrink tube is pulled over a region of the abutting elements. Heat is applied to the shrink tube by means of an industrial hot-blast device or a Bunsen burner such that as a result of this the diameter of the shrink tube is reduced. The shrunk shrink tube thus contracts over the two ends of the elements and in this way forms a mechanical connection of the two elements.

The use of shrink tubes for connecting elements to be connected plays a role in particular in aircraft because shrink tube connections contribute to keeping the weight of the aircraft down. Furthermore, installation and deinstallation effort is reduced (making four or at least two steel strip clamps dispensible). Moreover, keeping hitherto-used special couplers is no longer necessary for the manufacturer or for the operator.

However, in an aircraft the available installation space is confined. Furthermore, an aircraft represents a temperature-sensitive environment in which the use of an open flame or some other strong heat source as used according to the state of the art for producing a shrink tube

US 5,053,595 and US 4,883,925 disclose a connection system using heat shrink sleeves, wherein two cable elements can be connected via tubular heat schrink sleeves. The tubular sleeves are shrinkable when applying thermal energy. The thermal energy is applied in US 5,053,595 by using a heatable wire that is wrapped around the shrink sleeve several times or by using a rigid heating element. connection is critical. Moreover, there are stringent safety regulations relating to aircraft; regulations which often are not compatible with the use of a Bunsen burner or an industrial hot-blast device. Such basic conditions can also be found in other environments (railways, office blocks, etc.) in which shrink tube connections can be used.

It is an object of the invention to provide a shrink tube connection for connecting two elements even in confined and temperature-sensitive environments.

This object may be solved by a device for connecting two elements, by an arrangement for connecting two elements, by a method for producing a device for connecting two elements, by a method for connecting two elements, and by the use of a heating element for shrinking a shrink tube with the features according to the independent claims.

The device according to the invention for connecting two elements by means of shrinking a shrink tube comprises a heating element and a control unit. The heating element is adapted for providing thermal or inductive energy and is further adapted such that with it a shrink tube, which can be pulled onto a connection region of two elements to be connected, can be encased along at least part of the circumference of the shrink tube. The control unit is adapted for supplying electrical energy to the heating element, and is further adapted such that with it the temperature of the heating element can be controlled in such a way that, by means of shrinking the shrink tube, the two elements are connectable.

Furthermore, according to the invention, an arrangement is created for connecting a first element to a second element in a connection region by means of a shrink tube, wherein said arrangement comprises a first element, a second element, a shrink tube, a heating element and a control unit. The shrink tube is pullable onto a connection region of the first element and the second element. The heating element is adapted for providing thermal or inductive energy and is further adapted such that with it the shrink tube can be encased along at least part of the circumference of the shrink tube. The control unit is adapted for supplying electrical energy to the heating element and is further adapted such that with it the temperature of the heating element can be controlled such that, by means of shrinking the shrink tube, the first element can be connected to the second element.

In the method according to the invention for producing a device for connecting two elements by means of shrinking a shrink tube, a heating element for providing thermal or inductive energy is formed and adapted such that with it a shrink tube which can be pulled onto a connection region of two elements to be connected can be encased along at least part of the circumference of the shrink tube. A control unit is formed for supplying electrical energy to the heating element and is adapted such that with it the temperature of the heating element can be controlled such that, by means of shrinking the shrink tube, the two elements are connectable.

Furthermore, according to the invention, a method for connecting two elements by means of shrinking a shrink tube is provided, in which method a shrink tube is pulled onto a connection region of two elements to be connected, along at least part of its circumference the pulled-on shrink tube is encased by a heating element, and by means of the heating element thermal or inductive energy is supplied to the shrink tube, wherein the temperature of the heating element is controlled such that, by means of shrinking the shrink tube, the two elements are connected.

According to the invention, furthermore, a shrink tube is used along at least part of the heating element encasing its circumference to provide thermal or inductive energy for shrinking the shrink tube for connecting two elements onto which in a connection region the shrink tube is pulled.

A basic idea of the invention may be seen in that a shrink tube for connecting two elements is supplied in a targeted way with a defined quantity of heat required for shrinking, in that the shrink tube is directly encased by a heating element for providing the thermal or inductive energy required for shrinking. Preferably, the shrink tube is brought into direct contact with the heating element such that heat transfer/introduction can take place by means of heat conduction and/or heat radiation and/or heat convection. In other words, the heat source and the shrink tube are arranged so as to be directly spatially adjacent such that according to the invention the efficiency when supplying thermal or inductive energy for shrinking the shrink tube is significantly improved. Because the heat transfer is spatially more localised, and the quantity of heat to be provided overall is reduced as a result of increased efficiency during heat transfer when compared to the state of the art, the shrink tube connection according to the invention can be used even in critical, spatially confined, temperature-sensitive environments, for example in an aircraft. The solution according to the invention also meets stringent safety regulations because with the invention the quantity of heat emitted to the surroundings is reduced, and an open fire (as is the case with the use of a Bunsen burner) or a spatially non-confined flow of hot air (as is the case with the use of an industrial hot-blast device) is avoided.

Application of the invention is therefore particularly advantageous in such scenarios in which due to confined installation space or stringent safety requirements (for example in an aircraft, in which a naked flame must at all costs be avoided, or in which the temperature sensitivity of the surroundings are to be taken into account) shrinking the shrink tube into place by means of an open heat source is problematic.

Concretely, the heating element of the invention can be implemented as a heating sleeve for shrinking into place a shrink tube connection. In this way a secure lightweight connection between two elements can be implemented by means of a targeted supply of thermal or inductive energy, wherein the overall energy quantity arising and any undesired heating up of the environment are reduced.

Two elements to be connected (for example two pipe ends to be connected or two cable ends to be connected), onto which elements the shrink tube is pulled, can be positioned such that the shrink tube is aligned by means of markings (for example colour markings) on the elements to be connected. A heating element (for example a heating mat) covers the shrink tube in a predefinable connection region, of sufficiently large size, of the elements to be connected. Preferably, the heating element envelops the shrink tube over its entire circumference. As an alternative it is possible that the heating element envelops the shrink tube only along part of its circumference (for example half the circumference or a quarter of the circumference), for example with the use of a heating element with an essentially U-shaped profile, into which the shrink tube can be inserted. Additional elements may be provided, for example a temperature sensor for determining the temperature of the heating element or of the shrink tube, or hook and fleece tapes for attaching a heating mat placed around the shrink tube.

By means of a thermal energy source it is then possible to supply heat directly to the shrink tube, for example by implementing temperature control according to the specifications of the shrink tube or of a diameter parameter, if required with the use of time control, as a result of which the shrinking process is initiated and controlled or regulated. Once a desired shrinkage temperature has been achieved and this shrinkage temperature has been maintained for a specified period of time, the supply of energy can be terminated. A high-quality, secure and pressure-proof connection between the two elements (for example a pipe connection) has then been formed with little expenditure of energy. The heating sleeve can then be removed from the device and can be employed in some other position.

The control unit, which is electrically coupled to the heating element, can control the time-related and/or space-related temperature gradient on the shrink tube. A control routing used to this purpose can be adapted specifically to the particular shrink tube used or to the particular elements to be connected that are used. The control modalities (for example control algorithm or regulating algorithm, materials parameter or diameter parameter) of the control unit can be predefined so as to be fixed in the control unit or they can be set by the user by means of a user interface on the control unit and can thus be adjusted flexibly to the requirements of each individual case.

According to the invention, the control system can be implemented either by means of a computer program, i.e. by means of software, or by means of one or several special electronic circuits (for example on a printed circuit board or as a monolithically integrated circuit), i.e. in hardware, or in any desired hybrid form, i.e. by means of software components and hardware components, which algorithms take into account the materials characteristics of the shrink tube used, as well as its diameter. In this case a control unit is provided.

Preferred improvements of the invention are stated in the dependent claims.

Below, embodiments of the device according to the invention are described. These embodiments also apply to the arrangement according to the invention, to the methods according to the invention as well as to the use according to the invention.

The device can comprise a carrier body on which and/or in which the heating element is arranged. The heating element can either be embedded in the carrier body or applied to the surface of said carrier body. Embedding provides safe protection of the heating element against damage because the heating element is surrounded by the material of the carrier body. Attachment of the heating element to the carrier body ensures particularly good heat transfer between the heating element and the shrink tube.

The heating element and the carrier body can be a heating mat which is designed to be wrapped around the shrink tube. According to this embodiment, the heating mat can be mechanically flexible or bendable such that the heating mat can be wrapped around the shrink tube or around part of the shrink tube so as to establish good thermal contact. Concretely, such a heating mat or heating sleeve is an electrical heater, preferably comprising integrated thermal insulation. Such a heating sleeve can be made from a textile material and can comprise a heating surface, an electrically insulated heating line, thermal insulation and a robust outer casing. If such a heating sleeve is wrapped around a shrink tube, the heating sleeve can be fixed by means of an attachment device (for example a hook and loop fastener) such that the heating sleeve securely and steadily surrounds the shrink tube. Such an attachment device should be able to be detachable quickly such that after shrinking of the shrink tube the heating sleeve is removable and can be used immediately for establishing another shrink connection.

According to the invention, the materials for such a heating sleeve can be selected based on the conditions of use (in particular the materials and geometric parameters of the shrink tube and the elements to be connected). For example silicon, textile glass or textile quartz glass can be used as materials for the carrier body.

As an alternative to the described embodiment, the heating element and the carrier body can comprise two (or more) shell elements which are adapted to be placed around a shrink tube. For example, the heating element and the carrier body can comprise two semi-cylindrical shells, which are for example attached to each other by means of a hinge. The semi-cylindrical shells can be placed around the shrink tube and can subsequently be brought into direct contact with shrink tube, for example in that the hinge connection is closed. In this way particularly robust carrier bodies can be used. Furthermore, according to this embodiment, the installation effort for attachment of the device around a shrink tube to be shrunk is very modest.

In the device, the heating element can be adapted such that with it a shrink tube that can be pulled onto a connection region of two elements to be connected can be encased along the entire circumference of the shrink tube. This embodiment provides particularly good heat exchange between the shrink tube and the heating element because the shrink tube is entirely surrounded by the thermal or inductive energy source, i.e. by the heating element.

The heating element can for example be implemented as a meander-shaped heating wire. With this configuration a large quantity of heat can be provided in a confined space. A spiral-shaped geometry is also possible.

The control unit/regulating unit can be designed such that it controls/regulates the temperature of the heating element based on at least one material parameter of a shrink tube to be shrunk. The required quantity of heat or an advantageous temperature gradient for the shrinking process of a shrink tube, among other things depends on the material. For example a radiation cross-linked polyolefin, Kynar^{™}, Viton^{™} or Teflon^{™} can be used in a shrink tube.

Furthermore, the control unit or regulating unit can be designed such that it controls and/or regulates the temperature of the heating element based on at least one geometry parameter of a shrink tube to be shrunk, for example its length, its diameter, or wall thickness. The quantity of heat to be supplied or an advantageous time-related temperature gradient on the heating element, among other things depends on the diameter of the shrink tube, its length, and on the elements (pipes, cables, wires, etc.) onto which it is to be shrunk. By means of adapting the temperature cycle, the shrinking-on process can be optimised.

Furthermore, the control unit/regulating unit can be adapted in such a way that it controls/regulates a temperature-time gradient of the heating element. In this way a temperature cycle (heating - shrinking at a constant temperature - cooling) can in a targeted way be attuned to the materials used or to the elements to be connected.

Preferably, the control unit is a regulating unit to which an actual temperature (i.e. a measured present temperature) of the heating element can be supplied and which, based on the actual temperature, regulates or sets a desired temperature of the heating element. In other words, the control unit according to the invention can also comprise a regulating mechanism. This means that the quantity of heat produced by the heating element is readjusted on the basis of an acquired actual temperature of the heating element. In this way the supply of too much or too little thermal or inductive energy to a shrink tube can be corrected.

The device can comprise a temperature sensor for determining the actual temperature of the heating element, which temperature is to be supplied to the regulating unit. Such a temperature sensor can for example be a Pt100 resistance thermometer.

Below, embodiments of the arrangement according to the invention are described. These embodiments also apply to the device according to the invention, the methods according to the invention, and to the use according to the invention.

In the arrangement the first element can be a first pipe and the second element can be a second pipe. Thus, according to the invention, a high-quality pipe connection between two end regions of a pipe to be connected can be implemented with locally well-defined heat transfer.

As an alternative, the first element can be a first cable (for example a wire with an insulation cover) and the second element can be a second cable (for example a wire with an insulation cover). It is thus for example possible to envelop two cable ends stripped of insulation, i.e. two bared wire ends, with a cylindrical shrink tube, and subsequently by means of targeted heat transfer to simultaneously interconnect the two wires mechanically and such that they are electrically conductive, and to provide electrical insulation to them. In this case the shrunk shrink tube is simultaneously a connection element and an electrical insulation element.

Connection of the wires by means of the shrink tube can optionally, for example, be supported in that the wires in a border region comprise a means that strengthens the connection (for example a solder such as soldering tin). The heat transfer for shrinking the shrink tube can then also be used for melting the soldering tin.

The first element can comprise a first alignment mark, and/or the second element can comprise a second alignment mark, wherein by means of the first alignment mark and/or the second alignment mark the shrink tube to be pulled on can be aligned on the first element and on the second element. Such an alignment mark on at least one of the two elements to be connected can be used for adapting the relative position of the first element in relation to the second element so as to achieve a high-quality good connection between the two elements.

The first alignment mark and/or the second alignment mark can be a visually perceptible mark, a mark that is perceptible in a tactile sense, or a mechanical mark. A visual alignment mark can for example be a colour mark on the elements to be connected, for example a circumferential visible line provided on the first element and/or on the second element and which indicates optimum positioning of the two elements to be connected in that the two end regions of the shrink tube coincide with the colour marks with optimum positioning of the shrink tube pulled into place. The alignment mark can also be a scratch mark, in other words a mechanical indentation in one of the elements to be connected. An abutment mark is also possible, in other words a mechanical end stop for the pulled-on shrink tube on one of the elements to be connected.

Below, one embodiment of the method for connecting two elements is described. This embodiment also applies to the device according to the invention, the arrangement according to the invention, the method according to the invention for producing the device, and to the use according to the invention.

According to this embodiment, regulating (or controlling) the temperature of the heating element involves increasing the temperature from a starting temperature to a predefinable target temperature; maintaining the target temperature for a predefinable maintenance time; and reducing the temperature from the target temperature to the starting temperature. By predefining such a temperature cycle with predefinable parameters the shrinking process can be optimised. In this way a stable shrink tube connection is achieved with little heat transfer.

Below, one embodiment of the use according to the invention is described. This embodiment also applies to the device according to the invention, the arrangement according to the invention, and the methods according to the invention.

Shrinking shrink tubes by means of a defined supply of thermal or inductive energy to the shrink tube, with the use of a heating element enveloping said shrink tube for connecting two elements, can be carried out particularly advantageously in an aircraft. In an aircraft a shrink connection can be used as a reliable and weight-reducing connection between two elements, namely particularly advantageously when implementing such a shrink connection with the spatially exact supply, according to the invention, of thermal or inductive energy to a shrink tube to be shrunk, without there being any danger of overheating in a temperature-sensitive environment, or any danger of a fire breaking out.

Embodiments of the invention are shown in the figures and are explained in further detail below.

The following are shown:
- Figure 1: a lateral view of an arrangement for connecting two pipes, according to a preferred embodiment of the invention;
- Figure 2: a cross-sectional view, along sectional line I-I' shown in Figure 1, of the arrangement for connecting two pipes, according to the preferred embodiment of the invention;
- Figure 3: a lateral view of an arrangement for connecting two cables, according to another embodiment of the invention;
- Figure 4: a device for connecting two elements, according to one embodiment of the invention; and
- Figure 5: a device for connecting two elements, according to another embodiment of the invention.

Identical or similar components in various figures have identical reference numbers.

The representations in the figures are schematically and not to scale.

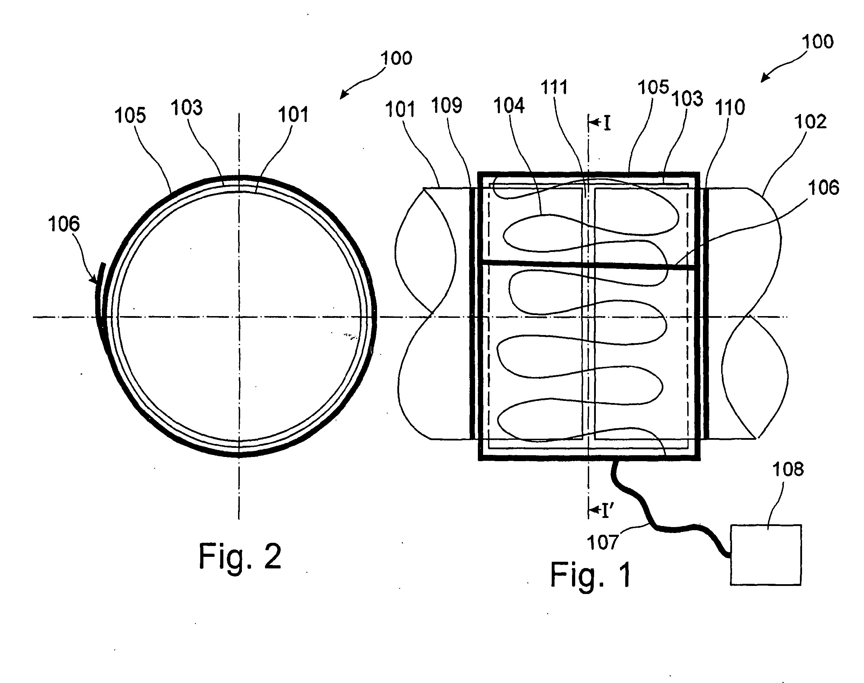

Furthermore, with reference to Figs 1 and 2, an arrangement 100 for connecting a first pipe 101 to a second pipe 102 by means of shrinking a polyolefin shrink tube 103, according to a preferred embodiment of the invention is described.

As shown in **Fig. 1**, the arrangement 100 comprises a first pipe 101 and a second pipe 102 which are to be connected in a connection region 111 (mechanically abutting or for mechanical end coupling <pipes can oscillate> with a gap). The arrangement 100 further comprises a polyolefin shrink tube 103 which by way of the connection region 111 of the first pipe 101 is connected to the second pipe 102. Furthermore, a meandering heating wire 104 with a high value of relative ohmic resistance is provided (on which heating wire 104 thus an adequate quantity of ohmic heat can be released when an electric current flows through it).

The heating wire 104 provides thermal energy for shrinking the polyolefin shrink tube 103 and is arranged such that with it the polyolefin shrink tube 103 is completely encased. Furthermore, a sleeve 105, i.e. a bendable carrier material, is provided, with the heating wire 104 arranged on the inside of said sleeve 105. The sleeve 105 encases the polyolefin shrink tube 103 such that good thermal coupling, preferably direct thermal contact, i.e. mechanical contact, is established between the heating wire 104 and the polyolefin shrink tube 103. A hook-tape closure 106 ensures that an end region of the sleeve 105, which end region comprises a hook-tape closure 106, is firmly attachable to a central section of the sleeve 105, comprising a fleece tape. In other words, by overlapping the hook-tape closure 106 with a fleece tape, stable fixing of the sleeve 105 becomes possible.

Furthermore, Fig. 1 shows a first colour mark 109 on the first pipe 101 and a second colour mark 110 on the second pipe 102. When the pipes 101, 102 are shifted together such that the polyolefin shrink tube 103 covers the connection region 111, then spatial correspondence of the colour marks 109, 110 with the marginal sections of the hollow cylindrical polyolefin shrink tube 103 or with the sleeve 105 indicates that the two steel pipes 101, 102 are optimally aligned in relation to each other for establishing a shrink tube connection.

By means of a cable 107, the heating wire 104 is electrically coupled to a control circuit 108.

The control circuit 108 comprises a monolithically integrated circuit in which a control program for controlling or regulating the time gradient of the temperature on the heating wire 104 is stored. By means of a user interface, a user can enter parameters for a connection to be established (material and dimensions of the polyolefin shrink tube 103; material and dimensions of the pipes 101, 102 to be connected; required strength of a connection to be established; etc.). Based on these parameters, the program, in the integrated circuit of the control circuit 108, controls and regulates the temperature gradient on the heating wire 104 in such a way that optimal shrinkage of the polyolefin shrink tube 103 becomes possible such that a permanent and stable connection between the first pipe 101 and the second pipe 102 is established. For this purpose the circuit 108 provides electrical energy in a regulable quantity to the heating wire 104 by way of the cable 107, which electrical energy is convertible in the heating wire to ohmic or inductive heat and is thus convertible to thermal energy. The circuit 108 therefore also fulfils the function of an electrical energy source.

After a user has entered shrink connection parameters by means of a user interface, the circuit 108, based on these shrink connection parameters, supplies electrical energy to the heating wire 104, which energy due to (desirable) ohmic losses in the heating wire 104 is converted to thermal energy. Due to good spatial and thermal coupling between the heating wire 104 and the polyolefin shrink tube 103 this thermal energy is transferred to said shrink tube 103. As a result of this a defined quantity of heat is provided to the polyolefin shrink tube 103, which leads to shrinkage of the shrink tube 103. In this way a stable connection between the first pipe 101 and the second pipe 102 is established.

**Fig. 2** shows a cross-sectional view of the arrangement 100 along a line I-I' shown in Fig. 1.

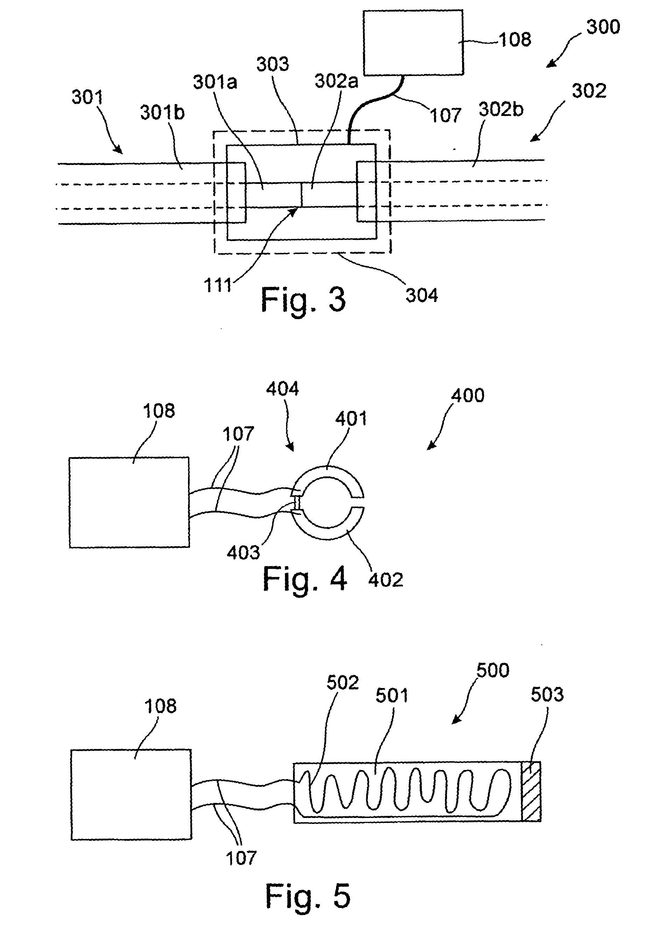

Below, with reference to **Fig. 3**, an arrangement 300 according to another embodiment of the invention is described.

The arrangement 300 is used to connect a first electrical cable 301 to a second electrical cable 302. As shown in Fig. 3, the first cable 301 comprises a copper core 301a and an insulation jacket 301 b, which envelops the copper core 301 a, for electrically insulating the copper core 301a. The second cable 302 comprises a copper core 302a and an insulation jacket 302b made from an electrically insulating material, which insulation jacket 302b envelops the copper core 302a. In a connection region 111 to be established, the first cable 301 and the second cable 302 are stripped of insulation. In other words, in this abutting region the insulation jacket 301b has been removed from the copper core 301a, and the insulation jacket 302b has been removed from the copper core 302a. The two cables 301, 302 thus abut each other. A Teflon shrink tube 303 has been pulled onto the stripped region of the first cable 301 and of the second cable 302. A heating mat 304, in other words a textile carrier material with a heating wire (not shown) provided therein, is provided which completely envelops the Teflon shrink tube. The heating wire of the heating mat 304 is connected to a circuit 108 by way of a cable 107.

By way of providing electrical energy from the circuit 108 to the heating wire of the heating mat 304, a defined quantity of thermal energy is supplied to the Teflon shrink tube 303 such that said Teflon shrink tube 303 shrinks, and produces a mechanical and electrical connection between the first wire 301 and the second wire 302. Since in the region stripped of the insulation the copper core 301a abuts the copper core 302a, the shrink tube 303, which tightly envelops the cables 301, 302, in the shrunk state establishes a mechanical and electrical connection.

Below, with reference to **Fig. 4** a device 400 for connecting two elements by means of shrinking a shrink tube according to one embodiment of the invention is described.

The arrangement 400 again comprises a circuit 108 which is coupled to a heating element 404 by means of cables 107. The heating element 404 comprises a first semi-cylindrical heating element shell 401 and a second semi-cylindrical heating element shell 402, which are coupled by means of a hinge 403. By opening the hinge 403, temporarily an opening can be established between the two semi-cylindrical heating element shells 401, 402, which opening is sufficient in size to insert a hollow-cylindrical shrink tube into the heating element 404. Then the hinge 403 is closed such that complete enveloping of the heating element 404 by the shrink tube is possible. The heating element 404 comprises the robust solid body shells 401, 402 and a heating wire (the latter not shown in Fig. 4).

Below, with reference to **Fig. 5**, a device 500 for connecting two elements by means of shrinking a shrink tube according to another embodiment of the invention is described.

The device 500 comprises a circuit 108 which is electrically coupled to a heating wire 502 by way of cables 107. The heating wire 502 is embedded in a textile sleeve 501. In an end region of the textile sleeve 501 a hook-tape closure 503 is provided.

To operate the device 500 for connecting two elements, the two elements are arranged so as to abut and are enveloped by a shrink tube. Then the sleeve 501 is wrapped around the shrink tube, wherein the textile sleeve 501 is fixed by means of the hook-tape closure 503. The circuit 108 provides electrical energy to the heating wire 502, wherein the heating wire 502 provides such an amount of energy to the shrink tube that said shrink tube shrinks and establishes a firm connection between the elements.

### List of reference characters

- 100: Arrangement
- 101: First pipe
- 102: Second pipe
- 103: Polyolefin shrink tube
- 104: Heating wire
- 105: Sleeve
- 106: Hook-tape closure
- 107: Cable
- 108: Circuit
- 109: First colour mark
- 110: Second colour mark
- 111: Connection region
- 300: Arrangement
- 301: First cable
- 301a: Copper core
- 301b: Insulation jacket
- 302: Second cable
- 302a: Copper core
- 302b: Insulation jacket
- 303: Teflon shrink tube
- 304: Heating mat
- 400: Device
- 401: First semi-cylindrical heating element shell
- 402: Second semi-cylindrical heating element shell
- 403: Hinge
- 404: Heating element
- 500: Device
- 501: Textile sleeve
- 502: Heating wire
- 503: Hook-tape closure

## Claims

1. A device for connecting two elements by means of shrinking a shrink tube (103; 303),
• comprising a heating element (104, 404, 502);
• comprising a control unit (108);
• wherein the heating element (104, 404, 502) is adapted for providing thermal or inductive energy and is further adapted such that with it a shrink tube (103; 303), which is pullable onto a connection region of two elements (101, 102, 301, 302) to be connected, is encasable along at least a part of the circumference of the shrink tube (103; 303); and
• wherein the control unit (108) is adapted for supplying electrical energy to the heating element (104, 404, 502) and furthermore is adapted such that with it the temperature of the heating element (104, 404, 502) is controllable in such a manner that, by means of shrinking the shrink tube (103; 303), the two elements (101, 102, 301, 302) are connectable;
• wherein the device (100, 300, 400, 500) further comprises a bendable carrier body (105, 304, 501) on and/or in which the heating element (104, 404, 502) is arranged;
• wherein the heating element (104, 404, 502) and the carrier body (105, 304, 501)are adapted for being flexibly wrapped around a shrink tube (103; 303).

2. The device of claim 1,
in which the heating element (104, 404, 502) is adapted such that with it a shrink tube(103; 303), which is pullable onto a connection region of two elements (101, 102, 301, 302)to be connected, is encasable along the entire circumference of the shrink tube (103; 303).

3. The device of any one of claims 1 to 2,
in which the heating element (104, 404, 502) is a meander-shaped heating wire.

4. The device of any one of claims 1 to 3,
in which the control unit (108) is adapted such that it controls the temperature of the heating element (104, 404, 502) based on at least one material parameter of a shrink tube (103; 303) to be shrunk.

5. The device of any one of claims 1 to 4,
in which the control unit (108) is adapted such that it controls the temperature of the heating element (104, 404, 502) based on at least one geometry parameter of a shrink tube (103; 303) to be shrunk.

6. The device of any one of claims 1 to 5,
in which the control unit (108) is adapted such that it controls a predefinable temperature-time characteristics of the heating element (104, 404, 502).

7. The device of any one of claims 1 to 6,
in which the control unit (108) is a regulating unit to which an actual temperature of the heating element (104, 404, 502) is supplyable, and which, based on the actual temperature, controls a desired temperature of the heating element (104, 404, 502).

8. The device of claim 7,
comprising a temperature sensor for determining the actual temperature of the heating element (104, 404, 502), which actual temperature is supplyable to the regulating unit.

9. An arrangement for connecting a first element to a second element in a connection region by means of a (103; 303) shrink tube,
comprising a first element;
comprising a second element;
comprising a shrink tube (103; 303);
comprising a device (100, 300, 400, 500) of any of claims 1 to 8 for connecting the first element to the second element by means of shrinking the shrink tube (103; 303);
wherein the shrink tube is pullable onto a connection region of the first element with the second element;

10. The arrangement of claim 9,
in which the first element is a first pipe, and in which the second element is a second pipe.

11. The arrangement of claim 9,
in which the first element is a first cable, and in which the second element is a second cable.

12. The arrangement of any one of claims 9 to 11,
in which the first element comprises a first alignment mark and/or in which the second element comprises a second alignment mark, wherein by means of the first alignment mark and/or the second alignment mark the shrink tube (103; 303) to be pulled on is alignable on the first element and on the second element.

13. The arrangement of claim 12,
in which the first alignment mark and/or the second alignment mark is
• a visually perceptible mark;
• a mark that is perceptible in a tactile sense; or
• a mechanical mark.

14. A method for producing a device according to one of the claims 1 to 8 for connecting two elements (101, 102, 301, 302) by means of shrinking a shrink tube (103; 303),
in which
• a heating element (104, 404, 502) is adapted for providing thermal or inductive energy and is further adapted such that with it a shrink tube, which is pullable onto a connection region of two elements (101, 102, 301, 302) to be connected, is encasable along at least a part of a circumference of the shrink tube (103; 303) and wherein the heating element (104, 404, 502) and the bendable carrier body (105, 304, 501) are adapted for being flexibly wrapped around a shrink tube (103; 303); and
• a control unit (108) is formed for supplying electrical energy to the heating element (104, 404, 502) and is adapted such that with it the temperature of the heating element (104, 404, 502) is controllable in such a manner that, by means of shrinking the shrink tube (103; 303), the two elements (101, 102, 301, 302) are connectable.

15. A method for connecting two elements (101, 102, 301, 302) by means of a device according to one of the claims 1 to 8,
in which
• a shrink tube (103; 303) is pulled onto a connection region of two elements (101, 102, 301, 302) to be connected;
• the pulled-on shrink tube (103; 303) is encased by a heating element (104, 404, 502) along at least a part of its circumference; wherein the heating element (104, 404, 502) and a bendable carrier body (105, 304, 501) are adapted for being flexibly wrapped around a shrink tube (103; 303); and
• by means of the heating element (104, 404, 502) thermal or inductive energy is supplied to the shrink tube (103; 303), wherein the temperature of the heating element (104, 404, 502) is controlled in such a manner that the two elements (101, 102, 301, 302) are connected by means of shrinking the shrink tube (103; 303);

16. The method of claim 15,
in which controlling the temperature of the heating element (104, 404, 502) comprises
• increasing the temperature from a starting temperature to a predefinable target temperature;
• maintaining the target temperature for a predefinable maintenance time; and
• reducing the temperature from the target temperature to the starting temperature.

17. The use of a device according to one of the claims 1 to 8, wherein a heating element (104, 404, 502)encases a shrink tube (103; 303) along at least part of its circumference for providing thermal or inductive energy for shrinking the shrink tube (103; 303) for connecting two elements (101, 102, 301, 302) in a connection region on which the shrink tube (103; 303) is pulled.

18. The use of claim 17,
implemented in an aircraft.

## Patentansprüche

1. Vorrichtung zum Verbinden von zwei Elementen durch Schrumpfen eines Schrumpfschlauchs (103, 303), wobei die Vorrichtung aufweist:
ein Heizelement (104, 404, 502);
eine Steuereinheit (108);
wobei das Heizelement (104, 404, 502) zum Bereitstellen thermischer oder induktiver Energie eingerichtet ist und ferner derart eingerichtet ist, dass mit ihm ein Schrumpfschlauch (103, 303), der auf einen Verbindungsbereich von zwei zu verbindenden Elementen (101, 102, 301, 302) aufziehbar ist, entlang zumindest eines Teils des Umfangs des Schrumpfschlauchs (103, 303) umhüllbar ist; und
wobei die Steuereinheit (108) zum Zuführen von elektrischer Energie an das Heizelement (104, 404, 502) eingerichtet ist, und ferner derart eingerichtet ist, dass mit ihr die Temperatur des Heizelements (104, 404, 502) derart steuerbar ist, dass durch Schrumpfen des Schrumpfschlauchs (103, 303) die zwei Elemente (101, 102, 301, 302) verbindbar sind;
wobei die Vorrichtung (100, 300, 400, 500) ferner einen biegbaren Trägerkörper (105, 304, 501) aufweist an und/oder in dem das Heizelement (104, 404, 502) angeordnet ist;
wobei das Heizelement (104, 404, 502) und der Trägerkörper (105, 304, 501) ausgestaltet sind, flexibel um den Schrumpfschlauch (103, 303) gewickelt zu werden.

2. Vorrichtung nach Anspruch 1, bei der das Heizelement (104, 404, 502) derart eingerichtet ist, dass mit ihm ein Schrumpfschlauch (103, 303), der auf einen Verbindungsbereich von zwei zu verbindenden Elementen (101, 102, 301, 302) aufziehbar ist, entlang des gesamten Umfangs des Schrumpfschlauchs (103, 303) umhüllbar ist.

3. Vorrichtung nach einem der Ansprüche 1 bis 2, bei der das Heizelement (104, 404, 502) ein mäanderförmiger Heizdraht ist.

4. Vorrichtung nach einem der Ansprüche 1 bis 3, bei der die Steuereinheit (108) derart eingerichtet ist, dass sie die Temperatur des Heizelements (104, 404, 502), basierend auf mindestens einem Materialparameter eines zu schrumpfenden Schrumpfschlauchs (103, 303), steuert.

5. Vorrichtung nach einem der Ansprüche 1 bis 4, bei der die Steuereinheit (108) derart eingerichtet ist, dass sie die Temperatur des Heizelements (104, 404, 502), basierend auf mindestens einem Geometrieparameter eines zu schrumpfenden Schrumpfschlauchs (103, 303) steuert.

6. Vorrichtung nach einem der Ansprüche 1 bis 5, bei der die Steuereinheit (108) derart eingerichtet ist, dass sie einen vorgebbaren Temperatur-Zeit-Verlauf des Heizelements (104, 404, 502) steuert.

7. Vorrichtung nach einem der Ansprüche 1 bis 6, bei der die Steuereinheit (108) eine Regelungseinheit ist, der eine Ist-Temperatur des Heizelements (104, 404, 502) zuführbar ist, und die basierend auf der Ist-Temperatur, eine Soll-Temperatur des Heizelements (104, 404, 502) regelt.

8. Vorrichtung nach Anspruch 7, aufweisend einen Temperaturfühler zum Ermitteln der tatsächlichen Ist-Temperatur des Heizelements (104, 404, 502), welche der Regelungseinheit zuführbar ist.

9. Anordnung zum Verbinden eines ersten Elements mit einem zweiten Element in einem Verbindungsbereich mittels eines Schrumpfschlauchs (103, 303), wobei die Anordnung aufweist:
ein erstes Element;
ein zweites Element;
einen Schrumpfschlauch;
eine Vorrichtung (100, 300, 400, 500) nach einem der Ansprüche 1 bis 8 zum Verbinden des ersten Elements mit dem zweiten Element durch Schrumpfen des Schrumpfschlauchs (103, 303);
wobei der Schrumpfschlauch (103, 303) auf einen Verbindungsbereich von dem ersten Element mit dem zweiten Element aufziehbar ist.

10. Anordnung nach Anspruch 9, bei der das erste Element ein erstes Rohr ist und bei der das zweite Element ein zweites Rohr ist.

11. Anordnung nach Anspruch 9, bei der das erste Element ein erstes Kabel ist und bei der das zweite Element ein zweites Kabel ist.

12. Anordnung nach einem der Ansprüche 9 bis 11, bei der das erste Element eine erste Ausrichtungsmarkierung aufweist und/oder bei der das zweite Element eine zweite Ausrichtungsmarkierung aufweist, wobei mittels der ersten Ausrichtungsmarkierung und/oder der zweiten Ausrichtungsmarkierung der aufzuziehende Schrumpfschlauch (103, 303) auf dem ersten Element und auf dem zweiten Element ausrichtbar ist.

13. Anordnung nach Anspruch 12, bei der die erste Ausrichtungsmarkierung und/oder die zweite Ausrichtungsmarkierung
eine visuell wahrnehmbare Markierung;
eine taktil wahrnehmbare Markierung; oder
eine mechanische Markierung
ist.

14. Verfahren zum Herstellen einer Vorrichtung nach einem der Ansprüche 1 bis 8 zum Verbinden von zwei Elementen (101, 102, 301, 302) mittels Schrumpfens eines Schrumpfschlauchs (103, 303), wobei in dem Verfahren
ein Heizelement (104, 404, 502) derart eingerichtet ist, thermische oder induktive Energie bereitzustellen, und ferner derart eingerichtet ist, dass mit ihm ein Schrumpfschlauch (103, 303), der auf einen Verbindungsbereich von zwei zu verbindenden Elementen (101, 102, 301, 302) aufziehbar ist, entlang zumindest eines Teils des Umfangs des Schrumpfschlauchs (103, 303) umhüllbar ist und wobei das Heizelement (104, 404, 502) und der biegbare Trägerkörper (105, 304, 501) ausgestaltet sind, flexibel um den Schrumpfschlauch (103, 303) gewickelt zu werden; und
eine Steuereinheit (108) zum Zuführen von elektrischer Energie an das Heizelement (104, 404, 502) gebildet und diese derart eingerichtet wird, dass mit ihr die Temperatur des Heizelements (104, 404, 502) derart steuerbar ist, dass durch Schrumpfen des Schrumpfschlauchs (103, 303) die zwei Elemente (101, 102, 301, 302) verbindbar sind.

15. Verfahren zum Verbinden von zwei Elementen (101, 102, 301, 302) durch eine Vorrichtung nach einem der Ansprüche 1 bis 8, bei dem
ein Schrumpfschlauch (103, 303) auf einen Verbindungsbereich von zwei zu verbindenden Elementen (101, 102, 301, 303) gezogen wird;
der aufgezogene Schrumpfschlauch (103, 303) von einem Heizelement (104, 404, 502) entlang zumindest einem Teil seines Umfangs umhüllt wird; wobei das Heizelement (104, 404, 502) und ein biegbarer Trägerkörper (105, 304, 501) ausgestaltet sind, flexibel um den Schrumpfschlauch (103, 303) gewickelt zu werden; und
durch das Heizelement (104, 404, 502) dem Schrumpfschlauch (103, 303) thermische oder induktive Energie zugeführt wird, wobei die Temperatur des Heizelements (104, 404, 502) derart gesteuert wird, dass zwei Elemente (101, 102, 301, 303) durch Schrumpfen des Schrumpfschlauchs (103, 303) verbunden werden.

16. Verfahren nach Anspruch 15, bei dem das Steuern der Temperatur des Heizelements (104,404,502)
Erhöhen der Temperatur von einer Starttemperatur bis zu einer vorgebbaren Zieltemperatur;
Aufrechterhalten der Zieltemperatur für eine vorgebbare Aufrechterhaltungszeit; und
Verringern der Temperatur von der Zieltemperatur auf die Starttemperatur aufweist.

17. Verwendung der Vorrichtung nach einem der Ansprüche 1 bis 8, wobei ein Heizelement (104, 404, 502) einen Schrumpfschlauch (103, 303) entlang zumindest einem Teil seines Umfangs umhüllt, um thermische oder induktive Energie zum Schrumpfen des Schrumpfschlauchs (103, 303) bereitzustellen, um zwei Elemente (101, 102, 301, 302) in einem Verbindungsbereich, auf den der Schrumpfschlauch (103, 303) aufgezogen ist, zu verbinden.

18. Verwendung nach Anspruch 17, die in einem Flugzeug implementiert ist.

## Revendications

1. Dispositif pour connecter deux éléments par l'intermédiaire d'une rétractation d'une gaine thermorétractable (103 ; 303),
• comportant un élément chauffant (104, 404, 502),
• comportant une unité de commande (108),
• dans lequel l'élément chauffant (104, 404, 502) est adapté pour fournir une énergie thermique ou d'induction et est en outre adapté de sorte qu'avec celui-ci une gaine thermorétractable (103 ; 303), qui peut être installée sur une zone de connexion de deux éléments (101, 102, 301, 302) à connecter, peut être entouré le long d'au moins une partie de la circonférence de la gaine thermorétractable (103 ; 303), et
• dans lequel l'unité de commande (108) est adaptée pour fournir une énergie électrique à l'élément chauffant (104, 404, 502) et de plus est adaptée de sorte qu'avec celle-ci la température de l'élément chauffant (104, 404, 502) peut être commandée d'une manière telle que, par l'intermédiaire d'une rétractation d'une gaine thermorétractable (103 ; 303), les deux éléments (101, 102, 301, 302) peuvent être connectés,
• dans lequel le dispositif (100, 300, 400, 500) comporte de plus un corps de support pouvant être incurvé (105, 304, 501) sur lequel et/ou dans lequel l'élément chauffant (104, 404, 502) est agencé,
• dans lequel l'élément chauffant (104, 404, 502) et le corps de support (105, 304, 501) sont adaptés pour être enroulés de manière souple autour de la gaine thermorétractable (103 ; 303).

2. Dispositif selon la revendication 1,
dans lequel l'élément chauffant (104, 404, 502) est adapté de sorte qu'avec celui-ci la gaine thermorétractable (103 ; 303), qui peut être installée sur une zone de connexion de deux éléments (101, 102, 301, 302) à connecter, peut être entouré le long de toute la circonférence de la gaine thermorétractable (103 ; 303).

3. Dispositif selon la revendication 1 ou 2,
dans lequel l'élément chauffant (104, 404, 502) est un fil chauffant en forme de méandres.

4. Dispositif selon l'une quelconque des revendications 1 à 3,
dans lequel l'unité de commande (108) est adaptée de sorte qu'elle commande la température de l'élément chauffant (104, 404, 502) sur la base d'au moins un paramètre de matériau d'une gaine thermorétractable (103 ; 303) à rétracter.

5. Dispositif selon l'une quelconque des revendications 1 à 4,
dans lequel l'unité de commande (108) est adaptée de sorte qu'elle commande la température de l'élément chauffant (104, 404, 502) sur la base d'au moins un paramètre de géométrie d'une gaine thermorétractable (103 ; 303) à rétracter.

6. Dispositif selon l'une quelconque des revendications 1 à 5,
dans lequel l'unité de commande (108) est adaptée de sorte qu'elle commande des caractéristiques de température-temps pouvant être prédéfinies de l'élément chauffant (104, 404, 502).

7. Dispositif selon l'une quelconque des revendications 1 à 6,
dans lequel l'unité de commande (108) est une unité de régulation à laquelle une température réelle de l'élément chauffant (104, 404, 502) peut être fournie, et qui, sur la base de la température réelle, commande une température voulue de l'élément chauffant (104, 404, 502).

8. Dispositif selon la revendication 7,
comportant un capteur de température pour déterminer la température réelle de l'élément chauffant (104, 404, 502), laquelle température réelle peut être fournie à l'unité de régulation.

9. Agencement de connexion d'un premier élément avec un second élément dans une zone de connexion, par l'intermédiaire d'une gaine thermorétractable (103 ; 303),
comportant un premier élément,
comportant un second élément,
comportant une gaine thermorétractable (103 ; 303),
comportant un dispositif (100, 300, 400, 500) selon l'une quelconque des revendications 1 à 8 pour connecter le premier élément au second élément par l'intermédiaire d'une rétractation de la gaine thermorétractable (103 ; 303),
dans lequel la gaine thermorétractable peut être installée sur une zone de connexion du premier élément avec le second élément.

10. Agencement selon la revendication 9,
dans lequel le premier élément est un premier tuyau, et dans lequel le second élément est un second tuyau.

11. Agencement selon la revendication 9,
dans lequel le premier élément est un premier câble, et dans lequel le second élément est un second câble.

12. Agencement selon l'une quelconque des revendications 9 à 11,
dans lequel le premier élément comporte un premier repère d'alignement et/ou dans lequel le second élément comporte un second repère d'alignement, dans lequel par l'intermédiaire du premier repère d'alignement et/ou du second repère d'alignement, la gaine thermorétractable (103 ; 303) à installer peut être alignée sur le premier élément et sur le second élément.

13. Agencement selon la revendication 12,
dans lequel le premier repère d'alignement et/ou le second repère d'alignement est
• un repère perceptible visuellement,
• un repère qui est perceptible par une détection tactile, ou
• un repère mécanique.

14. Procédé pour produire un dispositif selon l'une quelconque des revendications 1 à 8 pour connecter deux éléments (101, 102, 301, 302) par l'intermédiaire d'une rétractation d'une gaine thermorétractable (103 ; 303), dans lequel
• un élément chauffant (104, 404, 502), est adapté pour fournir une énergie thermique ou d'induction et en outre est adapté de sorte qu'avec celui-ci la gaine thermorétractable, qui peut être installée sur une zone de connexion de deux éléments (101, 102, 301, 302) à connecter, peut être entouré le long d'au moins une partie de la circonférence de la gaine thermorétractable (103 ; 303), et dans lequel l'élément chauffant (104, 404, 502) et le corps de support pouvant être incurvé (105, 304, 505) sont adaptés pour être enroulés de manière souple autour d'une gaine thermorétractable (103 ; 303), et
• une unité de commande (108) est formée pour fournir une énergie électrique à l'élément chauffant (104, 404, 502) et est adaptée de sorte qu'avec celle-ci la température de l'élément chauffant (104, 404, 502) peut être commandée d'une manière telle que, par l'intermédiaire d'une rétractation de la gaine thermorétractable (103 ; 303), les deux éléments (101, 102, 301, 302) peuvent être connectés,

15. Procédé pour connecter deux éléments (101, 102, 301, 302) par l'intermédiaire d'un dispositif selon l'une quelconque des revendications 1 à 8,
dans lequel
• une gaine thermorétractable (103 ; 303) est installée sur une zone de connexion de deux éléments (101, 102, 301, 302) à connecter,
• la gaine thermorétractable (103 ; 303) est entourée par un élément chauffant (104, 404, 502) le long d'au moins une partie de sa circonférence, l'élément chauffant (104, 404, 502) et un corps de support pouvant être incurvé (105, 304, 501) étant adaptés pour être enroulés de manière souple autour de la gaine thermorétractable (103 ; 303), et
• par l'intermédiaire de l'élément chauffant (104, 404, 502) une énergie thermique ou d'induction est fournie à la gaine thermorétractable (103 ; 303), la température de l'élément chauffant (104, 404, 502) étant commandée de manière telle que les deux éléments (101, 102, 301, 302) sont connectés par l'intermédiaire d'une rétractation de la gaine thermorétractable (103 ; 303).

16. Procédé selon la revendication 15,
dans lequel commander la température de l'élément chauffant (104, 404, 502) consiste à :
• augmenter la température depuis une température de départ jusqu'à une température cible pouvant être définie,
• maintenir la température cible pendant un temps de maintien pouvant être prédéfini, et
• réduire la température depuis la température cible jusqu'à la température de départ.

17. Utilisation d'un dispositif selon l'une quelconque des revendications 1 à 8, dans lequel un élément chauffant (104, 404, 502) entoure une gaine thermorétractable (103 ; 303) le long d'au moins une partie de sa circonférence pour fournir une énergie thermique ou d'induction pour rétracter la gaine thermorétractable (103 ; 303) pour connecter deux éléments (101, 102, 301, 302) dans une zone de connexion sur laquelle la gaine thermorétractable (103 ; 303) est installée.

18. Utilisation selon la revendication 17,
mise en oeuvre dans un avion.
